# EUROPEAN PATENT SPECIFICATION

(11) **EP 4 061 618 B1**
(45) Date of publication and mention of the grant of the patent: **06.08.2025**
(21) Application number: 20811455.3
(22) Date of filing: 18.11.2020
(51) Int. Cl.: B29C 64/182, B29C 64/236, B29C 64/386, B29C 64/118, B29C 64/112, B33Y 10/00, B33Y 30/00, B33Y 50/00

(54) **3D PRINTING MACHINE AND MANUFACTURING METHOD**
MASCHINE ZUM 3D-DRUCKEN UND HERSTELLUNGSVERFAHREN
MACHINE D'IMPRESSION 3D ET PROCÉDÉ DE FABRICATION

(30) Priority: 18.11.2019 WO PCT/IB2019/059892; 19.11.2019 IT 201900021615
(43) Date of publication of application: 28.09.2022
(73) Proprietor: Thinking Additive Limited, London N3 1DP (GB)
(72) Inventor: CAVALLARO, Marco, London N1 7GU (GB); CHORBIKJ, Marko, London N1 7GU (GB)
(74) Representative: Mola, Edoardo
(86) International application number: PCT/IB2020/060860
(87) International publication number: WO 2021/099957

(56) References cited:
- CN-A- 108 527 846
- US-A1- 2015 035 198
- US-B1- 9 011 136

## Description

### TECHNICAL FIELD

The present invention refers to a 3D printer and a manufacturing method including such machine in particular for simultaneously printing of at least a pair of objects or sub-parts that are in a way related to each other by the relative symmetry or duality of human body, e.g. both orthopaedic and comfort left and right insoles of a pair of shoes, or left and right shin guards for sport equipment or left and right arm guard as a protective equipment in certain professions. These products are examples of applications where the paired design of paired objects represents the duality of human body, specifically related to the left and right extremities. In another example, the pair of objects might be designed around non-dual body segments, with the relative symmetry represented across both front facing and side facing plane passing vertically through the body e.g. a front and rear part of an orthopaedic chest support, left and right halves of a helmet to be subsequently joined and the like. In the latter instance, helves are sub-parts that are joined after the printing process to obtain the final object.

### STATE OF THE ART

So far, 3D printing has been widely used in many fields in view of its high flexibility, in particular for rapid prototyping.

The recent trend of customization of products calls for flexible manufacturing methods but, at the same time, mass production of customized goods requires efficient and rapid manufacturing lines. This is in particular important for wearable consumer goods in view of the spreading of 3D scanning and biometric sensors to collect biometric data and asymmetry within the body and/or differences from the body of one person to the body of another person.

Although there exists personalized solutions usually handmade or made by CAD/CAM systems for market niches, in most cases, in the current market, the offer of paired products such as mass-produced 'mirrored' insoles, provides for two objects that are perfectly symmetrical with respect to a plane (i.e. mirrored products). In view of an increasing demand for personalized or tailor-made solutions based e.g. on biometric data, nowadays much more easily gathered via 3D scanners, pressure and motion sensors, optical systems or other similar devices, a need is felt on the market to not only better select a pair of shoes among the existing ones but also to provide non-symmetrical paired product taking into account differences among the consumers and also the ones caused by asymmetry of the individual, e.g. from left and right side of the consumer's body.

At the moment, it is possible to manufacture different products, including non-symmetrical paired products, by dedicating to each of the products a specific flexible manufacturing line. This requires a relatively high expenditure because the total number of machines is doubled with respect to a single manufacturing line. Otherwise, a single flexible manufacturing line takes about twice the time for producing a pair of non-symmetrical products because only a single product is manufactured at a time. The inefficiency of the current approach also relies on the need to feed two different systems with different machine instructions and settings (this especially for Extrusion Deposition Technique systems).

In the field of additive manufacturing, and with specific reference to Extrusion Deposition Techniques, any part or sub-part which is added to a printing job and so included in the working volume, generates nearly a proportional time increase due to the need to extrude an added amount of material directly linked to the geometry and orientation of the new part or subpart so added. In other words, and differently from other 3D printing techniques, there is almost zero scale factor in adding more components in a same printing job, i.e. in the need to print two objects instead of one, the corresponding production time is nearly doubled. Even in the case of depositing sacrificial supporting features with the aim to hold final parts from gravity collapsing, the corresponding production time results sensitively increased. For this, the need to print more efficiently supporting features has evolved into a system with a second head, with its own respective opening (Ultimaker https:/ /www.youtube.com/watch?v=Oxay5LhoIH4). The latter shall be used exclusively for depositing support materials, with a corresponding and consequent added time for these specific auxiliary parts. By doing so, the presence of a second and dedicated head brings the possibility to use a dedicated material which simplifies the separation of the sacrificial parts, more easily removable via chemical or mechanical procedures, decreasing so the overall time for production. In this variant, the printing heads are mechanically connected to each other, having a fixed relative positioning (offset). Further evolutions of double heads have been recently disclosed (BCN3D https:/ /www.youtube.com/watch?v=q7UxQWz5Nm8), also in a non-cartesian setup (an example reference: Theta https:/ /www.youtube.com/watch?v=m8RTONaKNfc ) where the two deposition heads are independent, and free to move independently, changing the relative positioning between each other along one or more directions; they can print support and model materials by using the two deposition heads in a sequential way: while one head proceeds with the manufacturing process, by depositing its corresponding material, the other is held in a standby status. An example is when one head deposits a supporting sacrificial structure that will be removed in the finished product, while, the other head deposits layers of the final product which is physically supported, especially for the overhanging features, by the supporting structure. According to such example, the deposition heads sequentially work to produce a finished article or object. Differently from the previous variant, where the two extruders are attached, the use of independent extruders can bring much more functionalities to the 3D printing systems, this specifically in relation to productivity. It is in fact possible to use the independent extruders not only sequentially but also simultaneously to print two or more replicates of the same object (increased productivity by multiple copies of the same identical geometry) or otherwise to print two or more sections of the same object meant as a whole product (increased productivity by decreasing the time needed for the manufacturing of one object).

In the first case, where the increased productivity is achieved by multiple copies of the same identical geometry and a first and second deposition heads are implemented, the latter are controlled for the simultaneous production of multiple instances of the same object, whether it has been deposited in the same orientation by the two heads, also meant as replica mode, or in a mirrored mode with reference to a plane perpendicular to the axis along which the multiple deposition heads are movable. In both modes the extruders are not independently programmed. An example of these methods are: two extruders receive the same coordinates and deposition material quantity for which one of the three coordinates, more specifically the common axis (X) is differentiated by the distance or offset of the two extruders along the common axis and direction (replica mode) or with the inverted values of the common axis and direction (mirrored mode): from [X, Y] to [X + Extruders Distance, Y] in replica mode or either to [-X,Y] coordinates in the mirrored mode) (an example reference: FlashForge https:/ /www.youtube.com/watch?v=mU3iEQRtTUo).

In the second case, where the increase in productivity is achieved by speeding up the manufacturing process of one single part, a first and second deposition head simultaneously deposit a first and a second segment of the same object, for any given layer (an example reference: Cartesian reference frame Titan https://www.youtube.com/watch?v=TkEOMQ6rQ6s; polar reference frame Theta https://www.youtube.com/watch?v=8SplsSDy6So). In such a case, the extruders are independently programmed and they follow individual instructions after a preparatory modeling/process planning operation able to split the same object in several inter-connected parts to be produced at the same time. This implies that each layer must have a number of meeting locations where a segment from different heads come close to one another. Each meeting location is a structural weakness point for the layer and, therefore, for the printed object as a whole. This problem is solved by overlapping, in a subsequent layer, a segment from the first head on one from the second head deposited on the previous layer or vice versa. However, meeting locations cannot be avoided within each layer and this reflects on the overall structural performance of the object printed by the two heads.

While the solutions currently present in the art offer certain advantages in the field of deposition techniques of Additive Manufacturing and improved productivity, none of the current solutions enable the simultaneous production of multiple different objects with optimal structure, manufactured by multiple deposition heads.

The document CN 108527846 A discloses a system using orthogonal coordinates, wherein two printheads can be synchronised to produce two identical objects. The document US 2015/035198 Al discloses a system using cylindrical coordinates, wherein two or more printheads can be synchronised to produce a single object.

### SUMMARY OF THE INVENTION

The scope of the present invention is to provide a 3D printing machine and manufacturing method including such machine able to provide customized and structurally performing goods at an efficient manufacturing rate, in particular paired or set of objects with comparable encumbrance e.g. because of left-right or front-back asymmetry of the human body. Uses taking advantage of the present invention span from orthesis to sport goods for professional and amateur athletes, to mass production goods such as shoes for daily use, including midsoles, heels and other shoes components. More generally, objects manufactured according to the present invention are either two or more finished objects, such as e.g. a pair of midsoles, two or more semi-finished objects, such as e.g. a pair of arm guards to be finished after printing a.g. by a sander to provide a smooth texture, two or more sub-parts to be joined after printing to have the final object, e.g. left and right half of a helmet.

The scope of the present invention is achieved by a multi-head additive manufacturing machine comprising:
- A common first guide aligned to a first direction;
- A common second guide aligned to a second direction;
- A multi-deposition unit comprising at least a first and second deposition device wherein first and second deposition devices are independently actuatable to provide different quantities of deposition material;
- A multi-head unit movable with respect to the first and the second common guide and comprising at least a first and a second motorized deposition heads movable with respect to one another along a third guide aligned to a third direction, the first, second and third directions defining a three-dimensional reference frame for deposition; wherein the first and second printing heads comprise a respective opening through which the material is deposited;
- An electronic control unit programmed to:
   control the movement of the first and second deposition heads via actuators within the reference frame by processing at least a discretized sequence of coordinate value sets within the reference frame representing pre-defined first and second deposition paths for the respective first and second deposition heads as a plurality of points;
   provide, via a pre-defined first deposition quantity information for the first deposition head and a second deposition quantity information for the second deposition head, each of said deposition quantity information being associated to said points, a pre-defined quantity of material to be deposited along the first and second deposition paths via the openings and the deposition system;
   wherein the first and the second deposition heads are controlled with identical movements along the first and the second direction,
   wherein said coordinate values futher include a first position information along the third direction for the first deposition head and a second position information along the third direction for the second deposition head such that, for at least a section of said sequence where the first and second deposition heads shall simultaneously deposit, the first and second deposition paths describe arbitrarily different, non-mirrored, non-replica first and second segments segments, such segments having, for a first span along the first direction and for a second span along the second direction, a corresponding first length associated to the first head and a corresponding second legth associated to the second head so that the first segment has a different length from that of the second segment,
   the control unit coordinating the first and second deposition heads by operating said actuators and deposition system so that, when the first and second deposition heads simultaneously operate based on said section, each coordinate value set of said sequence having identical coordinate values along the first and second directions and different values along the third direction and for the first and second deposition information, is simultaneously reached by the first and second deposition heads so that the first and the second segment are synchronously deposited over the same time interval by having a first travelling speed of the first head higher than a second travelling speed of the second head when the first segment is longer than said second segment.

According to the above, a sequence of instructions comprising, for each point of the sequence, information about six degrees of freedom each corresponding to an actuator of the machine and relative to position information and deposition information, provide a compromise between flexibility for the designer to print different objects and improve productivity by having the heads priting at the same time. Furthermore, the selection of position and deposition information according to a discretized sequence guarantees coordination of motion and this positively impacts syncronism and productivity.

Furthermore, a first and a second direction of motion are constrained and heads are independent along the third direction of a three axes reference frame in order to reduce inertial forces and at the same time providing a certain degree of freedom in depositing the proper profile, contours or shapes as needed for the desired parts, which are therefore not identical or mirrored to one another at the end of the printing process. In particular, two non-replica segments have different respective lengths and are deposited over the same corresponding time interval. Therefore, the speed along the third direction is higher for the head that deposits the longer segment. This also strongly helps to program the control unit for actuating the heads because two out of three coordinates are in common. Another degree of freedom for the deposition process is the quantity of material of each head and potentially for each point of the deposition path array. Quantity may be expressed in different forms, e.g. volume of material between two adjacent points of the deposition path array, deposition rate or the length of filament with known cross section to be deposited through the deposition openings. For example, the quantity assigned to each deposition head is different when the third coordinate of paired points within the array is different in order to preserve a constant thickness and width of the deposited filament. In particular, when the difference between the third coordinates of the heads tends to increase, quantity of the head having the higher third coordinate shall be greater than that of the other head because the former is covering a longer section of its path than the corresponding one of the latter head. It is also possible that thickness and/or width of the deposited filament is different on various paths and this may help the designer to obtain the required relatively small difference between the products printed by the two heads.

Deposition technicques include but is not limited to extrusion of a polimeric material through a nozzle. Furthermore, the polymeric material may include non-polimeric particles, e.g. a composite material having a polimeric matrix and particles, fibers or the like embedded in the matrix. In addition, the material, polimeric or non-polimeric, may be softened or sintered or melted during deposition or is in a liquid-like or gel-like form during deposition, to be cured or generally solidified after deposition.

According to a preferred embodiment, the sequence is such that a discretization step pattern, i.e. the plurality of steps between adjacent points of the sequence, is common for the first and second deposition paths and, at the same time, the steps have variable values along the pattern so that, ideally, an operational parameter of the machine, e.g. the deposition of complex shapes having e.g. variable local radius of curvature, is optimized. In order to provide a sincronous motion of the deposition heads, the discretization step pattern is generated based on the deposition path with the most complex shape and is assigned as a common step pattern to all other deposition paths.

According to a preferred embodiment, each head prints a relative finished or semi-finished object or sub-part, i.e. deposition path of the first head do not overlap on the deposition path of the second deposition head and vice-verse at least along a section, e.g. at least two layers, of the sequence. In doing so, for each layer the filament may be continuous in order to provide the highest possible strength and structure. Meeting locations are avoidable for the benefit of mechanical perfomances. The machine simultaneously manufactures at least two objects or sub-parts that are neither identical (offset) nor mirrored. In particular, in the latter instance, according to the above the coordinates along the third direction are different both in sign and magnitude.

According to a preferred embodiment of the present invention, the control unit is programmed to calculate for each printing head:
o the speed of the printing head from a starting point to the adjacent one along the respective deposition path based on the sequence so that the first and second printing heads simultaneously start from the respective starting point and simultaneously are in the respective adjacent points, travelling at different speeds between the starting points and the adjacent points when the distance between the starting points and the adjacent points along the respective deposition paths is different; and
o each deposition rate based on said quantity and speed between a point and a subsequent one of the relative path or on the distance between a point and a subsequent one of the relative path;
   - wherein points of the first and second deposition paths are paired via the sequence so that for each pair the coordinate along the first direction and the coordinate along the second direction are equal and the control unit is programmed so that the heads are synchronized to reach each pair of points at a same given time.

Synchronism of deposition is crucial to valorize at maximum the scope of the invention as the total production rate for making 3D printed paired objects or sub-parts would be improved.

Furthermore, deposition rate is fine-tunable for each interval between two adjacent points for each deposition path and this may either provide a constant thickness and width bead over each deposition path or a variable thickness and/or width bead between two adjacent intervals on the same path.

The sequence as defined above provides the designer with a programming framework that is machine independent: starting from the same sequence, it will depend on the printing machine, including the deposition unit, to calculate a time and deposition rate that are within the specifications of the printing machine's hardware.

According to an embodiment of the invention, it is also provided a manufacturing method of two or more personalized paired products, e.g. soles of shoes, insoles, shin-guards, football chest protection, knee supports, arm guards, elbow braces, leg pads, shoulder pads etc. or of a product comprising joined halves e.g. a helmet to be worn by an individual, comprising the step of providing the additive manufacturing machine according to any of the above paragraphs, and the step of printing the paired products or the halves of the halved product, wherein the first deposition path refers to one of the paired product, e.g. a left sole or front protection, and the second deposition path refers to the other paired product, e.g. a right sole or back protection, the control unit coordinating the first and second deposition heads by operating said actuators and deposition system so that, when the first and second deposition heads simultaneously operate based on said section, each coordinate value set of said sequence having identical coordinate values along the first and second directions and different values along the third direction and for the first and second deposition information, is simultaneously reached by the first and second deposition heads. It is important to note that 'personalized' comprises both personalization based on measurements on the final user, e.g. via a 3D scanner, and that based on a selection from a library of pre-defined geometries, such that one product of the pair is not a perfect symmetric sample of the other product of the pair.

Manufacturing paired or multiple products/sub-parts with relatively small differences, i.e. non identical or non-symmetric products, particularly exploits the manufacturing capacity of the machine according to the invention.

According to a preferred embodiment of the present invention, the method further comprises the step of collecting a biometric measure, e.g. a 3D scanning, of a part or parts of the body where the paired or halved products is adapted to be worn and wherein the first and second paths are linked to such biometric measure.

According to a preferred embodiment of the present invention, the manufacturing method further comprises the step of orienting a first and a second shape within the reference frame defined by the first, second and third direction, each shape being the respective base for the first and second deposition path, so that there is a minimum number of points within the position array that do not share the first and the second coordinates, the step of orienting being antecedent to the step of printing. In one example, a prefered orientation of the objects can be found by running an algorithm that iteratively changes the orientation of the objects and analyses the contour projections of the objects on the YZ plane. Therefore, by using an algorithm that e.g. minimises the difference between the obtained planar projections in YZ plane of both objects instead of minimising the bounding box volume as described, a prefered orientation can be found which maximises the simultaneous use of both of the deposition heads and improves the efficiency of the present invention.

The step of orienting aims at optimizing the exploitation of the printing machine, which is maximum when both heads deposit at the same time.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are not to be considered limiting of its scope, the disclosure will be described with additional specificity and detail through use of the accompanying drawings.
Figure 1 is a sketch showing an example of a machine according to the present invention wherein the second direction, i.e. Y- direction, is perpendicular to X- and Z- axes;
Figure 2 is a sketch of the machine of figure 1 in a plane showing Y- and X-axes;
Figure 3 is a sketch showing a preferred discretization of a first and second deposition paths;
Figures 4 and 5 show sketches about a suitable orientation of 3D geometrical or numeric models of the objects / sub-parts to be printed;
Figures 6 to 8 show sketches of deposition paths;
Figures 9 and 10 are flow-charts in a more general and two-head configuration for the calculation of operating parameters such as speed of the heads during printing; and
Figure 11 is a vectorial decomposition of a quantity discussed in Figures 9 and 10.

### DETAILED DESCRIPTION OF THE INVENTION

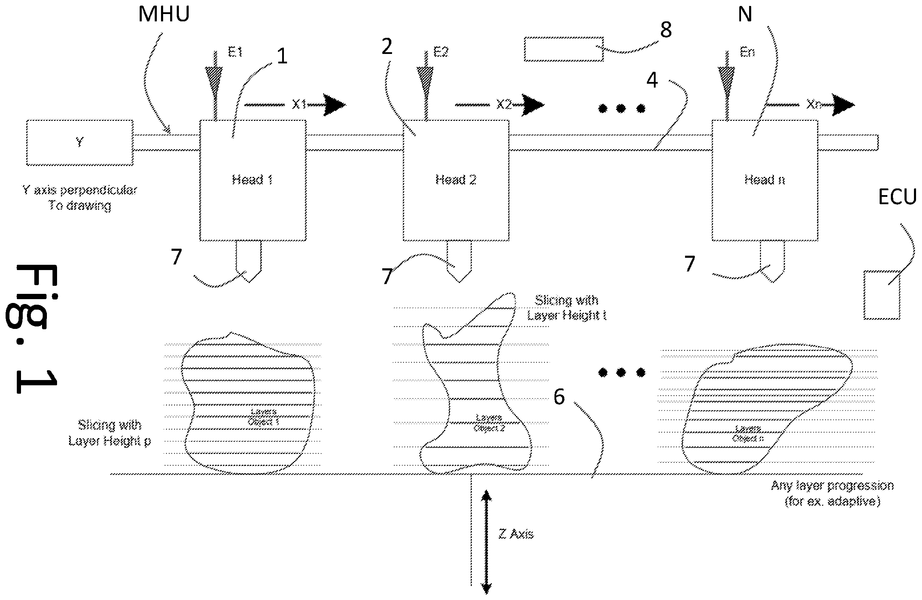

Figure 1 shows a preferred and not limiting embodiment of a printing machine according to the present invention wherein a multi-head unit (MHU) comprises first, second and third (or more) printing heads 1, 2, 3, 4 ... N, that move independently but without colliding along a single X direction, the direction being defined by a preferably rectilinear guiding beam 4.

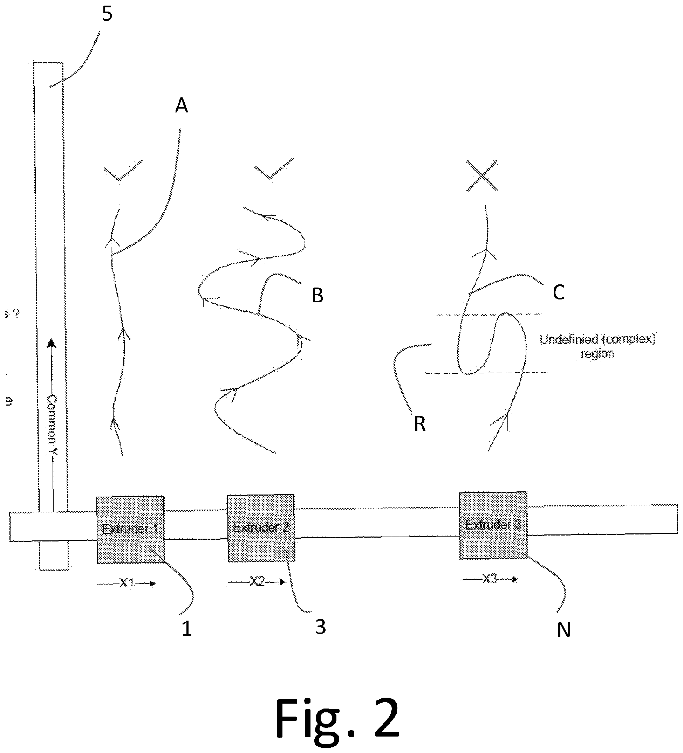

The printing machine further comprises another guide, preferably a rectilinear guide 5 (shown in figure 2), along which multi-head unit MHU travels parallel to a Y-direction and a printing bed 6 that receives a filament material extruded or otherwise deposited from a nozzle 7 of each head 1, 2, N. Multi-head unit MHU is configured to move with respect to bed 6 along a Z-direction, which defines with X- and Y- direction a reference frame to express a 3D deposition or deposition path of the material via a triplet of coordinates. Preferably X- Y- and Z- axes are rectilinear and mutually orthogonal but the present invention applies to other reference frames, e.g. for polar or spherical coordinates, depending on the case. Furthermore, according to the embodiment of figure 1, bed 6 moves along suitable guides but it is also possible that multi-head unit MHU move along the Z-direction and bed 6 be fixed.

The printing machine further comprises actuators, e.g. electric rotary motors, to move heads 1, 2, N in the reference frame, a multi-deposition unit 8 that can process a single deposition material or a plurality of materials e.g. a material X can be fed in nozzle 7 of head 1 and an elastic material Y can be fed to nozzle 7 of head 2, which can be as well different in size, e.g. one with orifice of 0.5mm other with 0.8mm, with a filament-like deposition material in a softened or partially melted condition to favor shaping and deposition and an electronic control unit ECU to control, e.g. via suitable circuitry and sensors, position within the reference frame of heads 1, 2, N via the actuators and a quantity of material to each head 1, 2, N. In particular, the deposition system comprises actuators to provide a diversified deposition rate for each head. A control parameter of such actuators may be used to indicate an amount and/or rate of deposition material processed by each head, e.g. in case of extrusion, the angular position and motion of a feeding screw that feeds the respective deposition head.

As shown in figure 1, each head 1, 2, N prints its own object or sub-part so that material deposited by one printing head do not overlap with material deposited by another printing head.

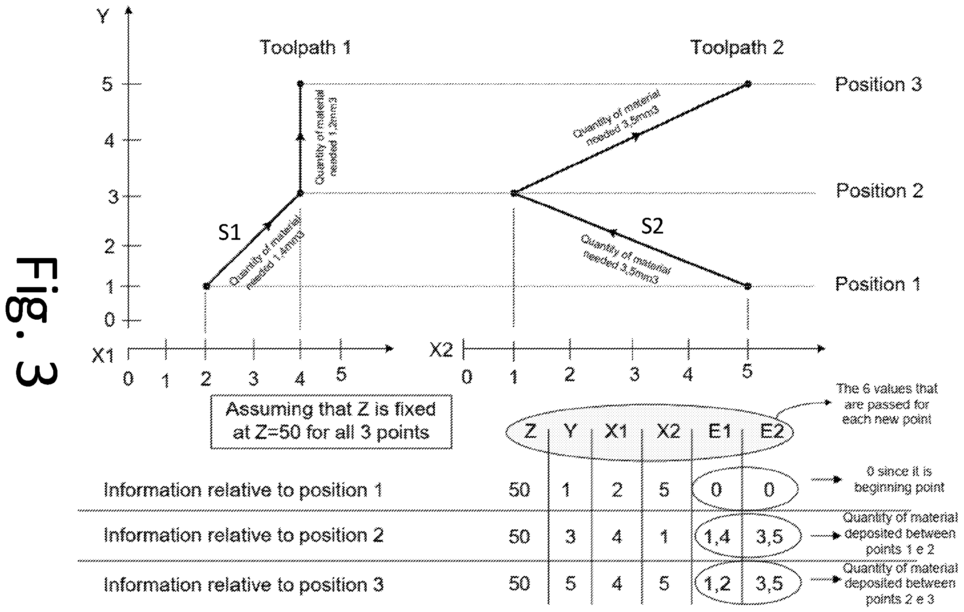

Furthermore, figure 1 shows objects having different slicing. This can be obtained by e.g. having head 1 depositing every other layer and head 2 depositing every layer. When head 1 does not deposit, the relative deposition data (E1 in figure 3) for the given z-coordinate of the sequence where head 2 does deposit is zero. Deposition data of head 1 for the subsequent layer shall take into account the higher volume of material to be deposited in order to have a different slicing than that of head 2. More generally, while one deposition head does deposit, the non-depositing head may move or not.

Figure 2 shows examples of deposition paths in the non-limiting embodiment where layers are substantially planar and deposited on a geometric horizontal plane perpendicular to the Z-direction. According to an important aspect of the invention, paths A and B show different geometries that are compatible with contemporaneous deposition of both heads 1 and 2. Deposition path C has a region R that is incompatible with a contemporaneous deposition with one or both of paths A, B: in such a region only head 3 is active and deposits whilst deposition from heads 1, 2 is temporarily stopped.

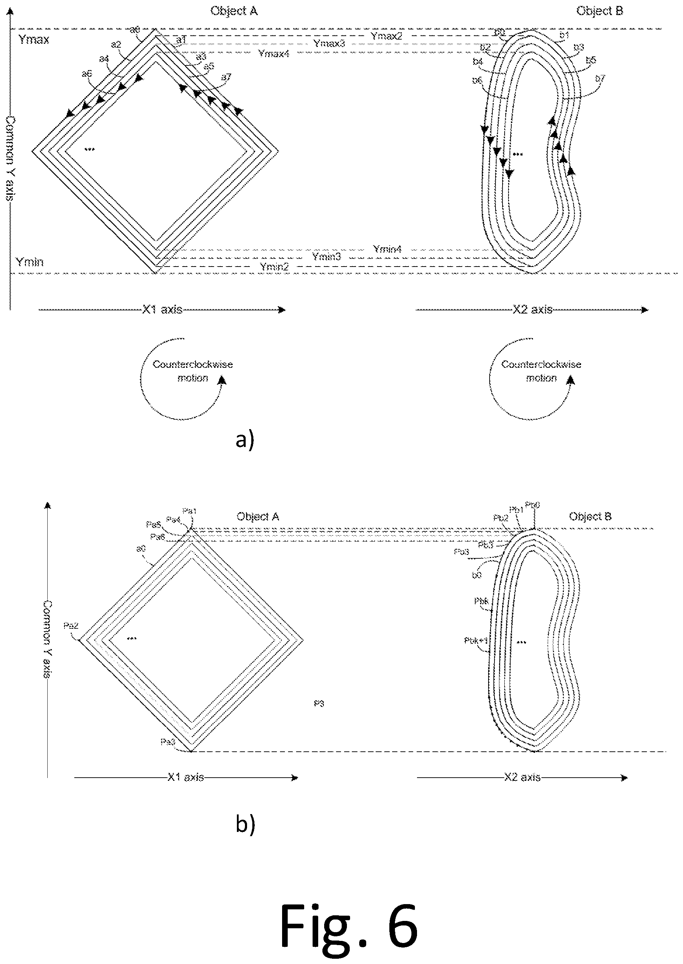

As shown in figure 2, the toolpaths of the first and second deposition heads shall have a certain degree of similarity in order to be processed by the machine. For example, it is not possible to process a toolpath for e.g. deposition head 1 that, at a given step of the relative array, requires a negative displacement along the y axis together with another toolpath for e.g. deposition head 2, that requires a positive displacement along the y axis. Figure 2 (and figures 6 to 8) shows how coordinates along the Z and Y axis are identical between toolpath and cordinates along the X axis are different so as to generate a non-replica, non-mirrored figures or segments.

Figure 3 shows a detail to describe a preferred programming of electronic control unit (ECU) for the definition of exemplary deposition path 1 and 2. According to a preferred embodiment, each deposition path is identified by a pre-defined input array or sequnce comprising a first section with the triplets of coordinates of each point of an arbitrary spatial discretization applied to the preferred deposition path. As shown in figure 3, for heads 1 and 2 coordinates z and y are the same because the latter are provided by movements along the common guides 5 and bed 6.

Input array or sequence of figure 3 also comprises a section about a quantity of deposition material, preferably expressed as a volume of material, to be deposited when travelling from a starting point to and adjacent point by the relative head 1, 2.

Each row of the array includes position and, preferably, non-position information, e.g. quantity of material to be deposited, speed at a given point in space. Furthermore, array of figure 3 is a single sequence for both heads but it is possible to provide an array for each head, wherein, for a given row, Y and Z coordinates are identical and X coordinates as well as other non-position information are different.

Array may include both position and non-position absolute space coordinates or displacements with sign. In the latter case it is very easy to spot an inconsistency of toolpaths because it is not possible to have, at a given step of the array i.e. at a give y-coordinate, displacements of different signs for head 1 and head 2. If the array contains absolute coordinates, it is a simple algebraic step to calculate the displacement and therefore compatibility of toolpaths.

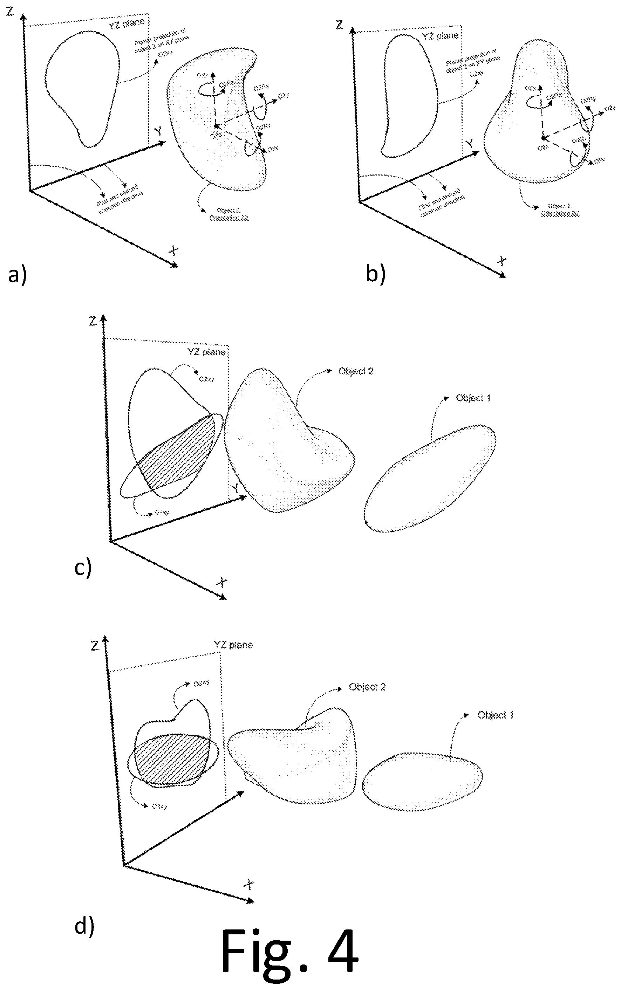

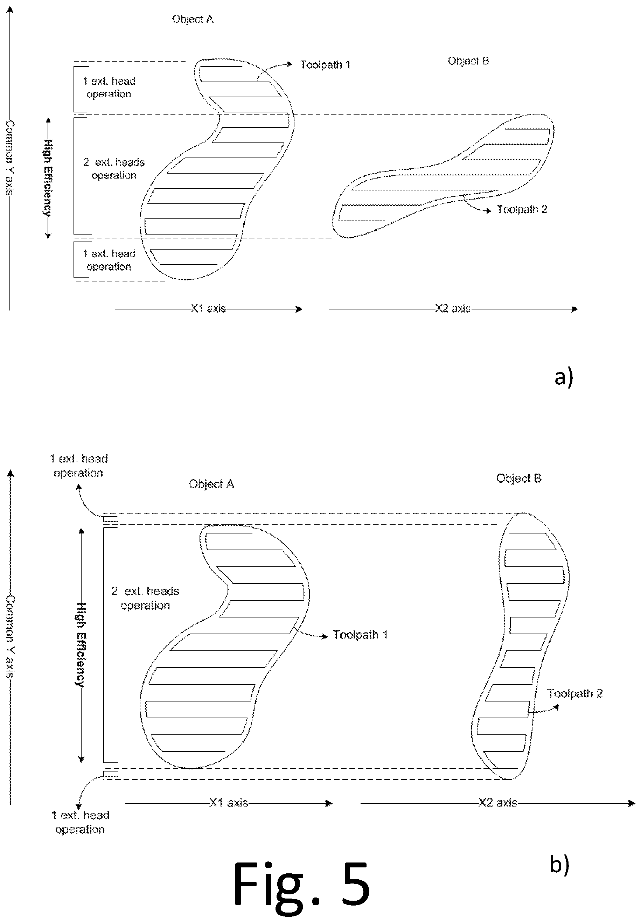

Figures 4 and 5 show a preferred embodiment of the invention wherein two shapes are oriented e.g oriented at an angle about Z-axis in order to maximize the condition for contemporary deposition of heads 1 and 2. According to a preferred embodiment, orientation of the pair of shapes to be printed is calculated as follows:
- Calculation of centroids of first and second 3D model of the shapes to be printed, whereas a centroid is defined as a point whose position is the average or mean position of all points constituting the object.
- Orientation of local xyz reference frame centered in each centroid is operated, local reference frames being 'parallel' to machine reference frame.
- Iterative rotations about the centroids and axes of local reference frames by a preset finite angle are applied to each 3D model and respective projections on a plane defined by the first and second common directioons of the deposition heads, i.e. Y-Z plane are collected (figures 4a, 4b).
- All projections from first object are compared to all projections from second object on a 1-to-1 basis, by a brute force algorithm, while having their centroids aligned along X axis.
- As an output and final solution of the brute force algorithm is provided the pair of projections of first and second object that have the biggest common/overlapping area of YZ projections.
- In a case of multiple solutions that have equal or similar common area, the final solution is selected as the one having the objects in such orientation that minimize the Z coordinate.

Orienting may be either calculated onboard of the manufacturing machine, or by an external electronic device, in which case arrays take into account the optimized orientation.

Figure 5 shows in greater detail, within the slicing plane, a possible starting orientation of 3D models projections and a better orientation in which the syncronisation of deposition is improved (or potentially optimized). More generally, orientation is such that a parameter indicative of simultaneous deposition of two priting heads, e.g. percentage of overlapping area with respect to total area, is kept above a predefined level.

Figures 6 to 8 show different approaches for defining deposition path. In particular, once an optimal orientation has been defined for both of the objects, they are sliced with a horizontal plane (XY) perpendicular to the plane defined by first and second common direction (YZ). An iterative slicing between the horizontal plane (XY) and different Z height identifies the layers for which toolpaths need to be developed for example for Z=const. The height difference between the intersections defines the layer height. In particular, figure 6 shows how discretization step pattern has variable step values in order to provide a better definition to the shape having higher complexity. Such step pattern is common to both layers so that sincronism is maximized. As an alternative, a more general decomposition of the object is automatically operated to generate a continuous serpentine, e.g. non-constant Z coordinate, toolpath for the object as a whole. In this way, a stratification of layers having no constant Z takes place and the deposition interruptions required by constant Z layers are avoided.

In Fig 6a, the layers of two objects A and B are shown. In this embodiment, the toolpaths are developed by first locating the Ymax and Ymin coordinate that in this example are equal for both of the objects. In a following step, the external contours of the layers obtained by the slicing in a preceding phase are split into left and right toolpaths, hereby denoted as a0 and a1 from object A and b0 and b1 from object B. The following toolpaths can be obtained by planar offset of these two toolpaths in the horizontal plane. Once the toolpaths have been developed, they are coupled in pairs for simultaneous execution, according to their Ymax and Ymin coordinates, denoted with Ymax2, Ymin2, Ymax3, Ymin3 etc. For example, a suitable pair for toolpath a0 could be found by analysing the respective Ymax and Ymin coordinates of all toolpaths from Object B and selecting the toolpath with most similar or identical Ymax and Ymin to the ones from a0, thus minimising the average error between corresponding extreme coordinates, resulting in both b0 and b1 as a possible solution in the example shown in Fig 6a. In such a case of multiple solutions, an applicable criterion for pairing is to pair left offset toolpaths of Object A, obtained as a result from offsetting a0 to left offset toolpaths of Object B, obtained as a result from offsetting b0. This is presented in Fig 6a, where the toolpaths have been paired in the following way: [a0,b0], [a1,b1],[a2,b2],[a3,b3] etc. During the manufacturing phase using this method, a simultaneous deposition of two deposition heads will take place in such way that deposition head 1 will follow the toolpaths belonging to Object A from the pairs, while deposition head 2 will follow the toolpaths belonging to Object B from the pairs. Furthermore, such figure shows how deposition heads 1, 2 deposit in a coordinated, continuous and simultaneous manner.

When using this multi-deposition method, an additional parameter of direction of Y axis (common direction) needs to be defined. In this example the pair [a0,b0] is being executed with a direction of movement of the common Y axis from Ymax to Ymin as indicated by the arrow, followed by a direction of movement from Ymin to Ymax of the common axis during execution of the second pair of toolpaths [a1,b1] as indicated by the arrows, thus causing a counterclockwise motion on both deposition head 1 and deposition head 2, maximising the relative distance between them, and consequently their thermal and airflow independence. In another example, where the toolpaths are paired as first pair [a0,b1] and second pair [a1, b0], while maintaining the same common direction from Ymax to Ymin for the first pair, and from Ymin to Ymax for the second pair, the motion of deposition head 2 would be clockwise, conversly to the counterclockwise motion of deposition head 1, thus countering its intertial forces, ultimately resulting in a dynamically more balanced system of the entire apparatus. These thermal or mechanical dynamics of the apparatus as described in this invention can be used as further criteria for defining the specific combination of toolpath pairs and common direction for process execution. The process of toolpath generation and pairing and/or common direction selection is then repeated, according to a given criteria similar to the ones described above, until a desired infill percentage of the layer is obtained. In some examples, the developed toolpaths can only consist of a certain number of contour offsets (also known as walls) without filling the rest of the layer.

Besides the preparation of the toolpaths in such a way that would enable execution using the multi-head depositionsion method, the process needs to be strictly controlled and synchronised in order to guarantee the correct geometrical deposition of the required toolpaths, while satisfying the constraints that common Y direction is shared for both of the deposition heads.

It is important that the control unit ensures correct interpolation of the required curves in a coordinated and synchronous way. In one example, this synchronicity can be achieved by a linear interpolation of points obtained by required sampling of the said curves. In such an example, every sampling point on any of the curves would require a sampling point on the other toolpath from the corresponding pair. Sampling points are collected in arrays as described above e.g. about Figure 3.

For example, reference can be made to Figure 6b where for an accurate representation of curve a0, three points Pa1,Pa2 and Pa3 would suffice. However, for accurate representation of the other curve in the corresponding pair, b0, more points might be necessary: Pb1, Pb2, Pb3, Pb4 etc... In such an example, the toolpath (or better CAM preparation) would need to also find suitable sampling points of curve a0, by for example a projection algorithm and locate points: Pa4, Pa5, Pa6 in order to specify the movement of the deposition heads in every point necessary for either of the curves.

It should be noted that such additional sampling points might not always be necessary due to accurate geometrical representation, but also due to examples where the material deposition needs to be controlled as for example, in areas where the deposition on one of the deposition heads needs to be stopped or initiated.

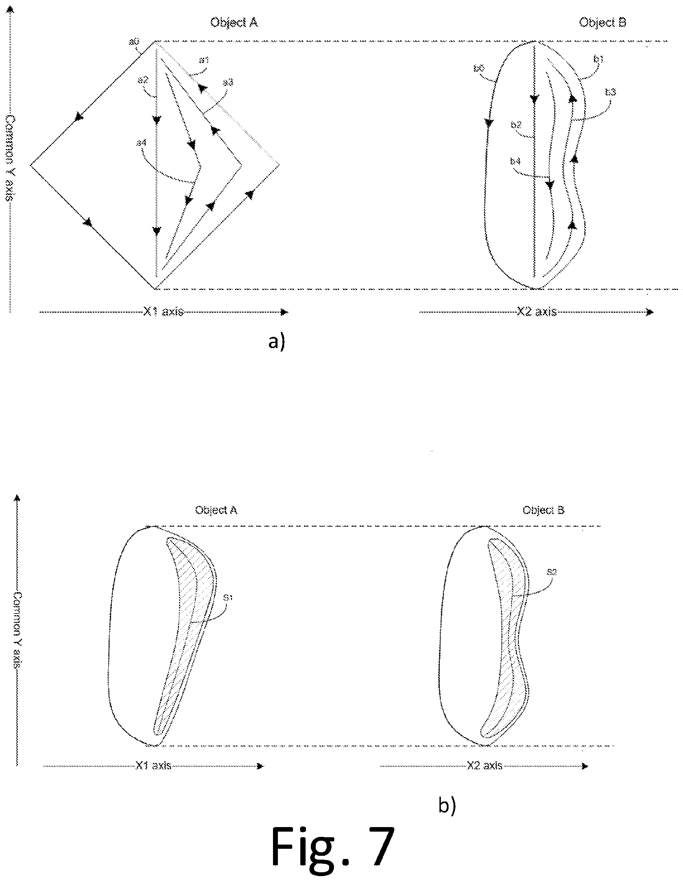

In another embodiment represented in Figure 7a, cross sections of Object A and Object B can be decomposed in suitable toolpaths following more complex algorithms for curve generation. In such an example, a mid-line toolpath has been generated by connecting the Ymax and Ymin points of each cross section of the corresponding objects, denoted as a2 and b2 in Fig 7a. The rest of the toolpaths can then be generated according to algorithms for morph curve (also known as tween curve) given a specific distance based on infill density, where the newly generated curves are generated as a weighted average of boundary curves, and where the weight is the distance from the boundary curves. For example, b3 and b4 are morph curves when using curves b1 and b2 curves as boundaries, and curves a3 and a4 are morph (tween) curves when using a1 and a2 as boundaries. Figure 7a shows how, according to the invention, corresponding segments a4 and b4 have different lengths and are deposited in the same time interval, i.e. are non-replica segments.

In such an example, the distance between adjacent toolpaths varies, so it can, for example, be particularly advantageous to provide deposition data relative to a varying filament width on a segment-to-segment basis, based on such toolpath distance, by controlling the amount of material deposited along the toolpaths, represented by the areas in pattern, depicted in Figure 7b. Such figure shows how corresponding segments, S1 and S2 are deposited synchronously during the same time interval to cover respectively different areas by a variation of the filament width. The control over width is beneficial as a further degree of freedom for the designer in order to extend the number of non-replica geometries that can be printed by the machine.

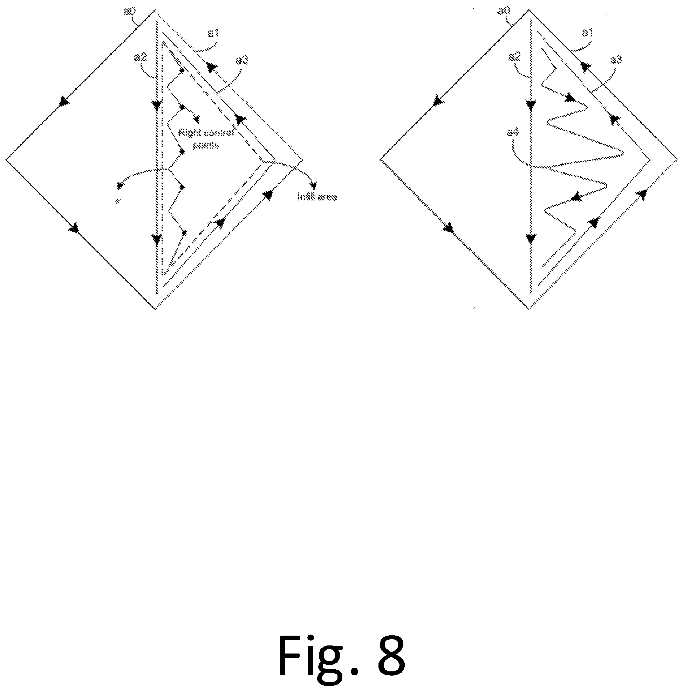

In yet another example, the geometry of some toolpaths may not be related to the geometry of the cross-section with such a high level of similarity, but might be obtained by populating the cross-section of the object by toolpaths from a premade database of toolpaths, depending on the area that needs to be infilled by toolpaths, and adjusting it to that infil area. For example, in Figure 8 toolpath a4 has been obtained by using a template zig-zag curve a', where all right hand control points of that curve have been extended in X direction untill intersection with the infill area.

The above described examples of different types of toolpaths and toolpath pairs between various objects can be combined in the deposition of layers.

It is important to note that speed of heads during deposition can be calculated by the control unit in a number of different ways. For example, an initial speed is assigned to each deposition head and such speed is maintained until the array specifies a different value in case such speed is always less than a maximum speed of the machine. Otherwise, the array further comprises a specific column for the speed to be kept at each step, i.e. between adjacent points along the deposition path. It is important to note that speed of a deposition head is defined by kinematic constraints, e.g. performances of actuators dedicated to move the head in the space or along a plane parallel to the deposition plane.

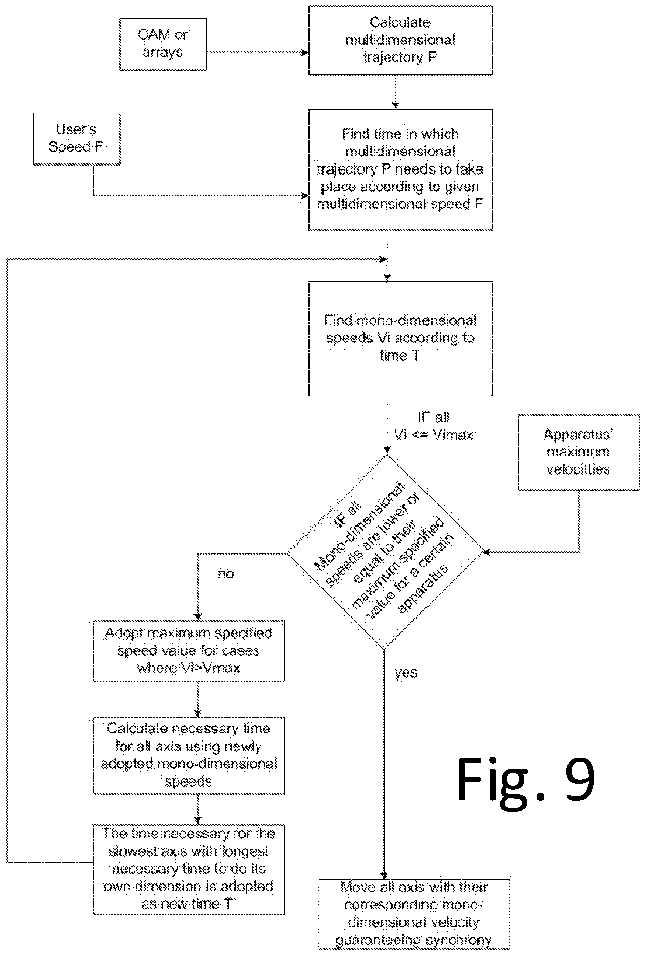

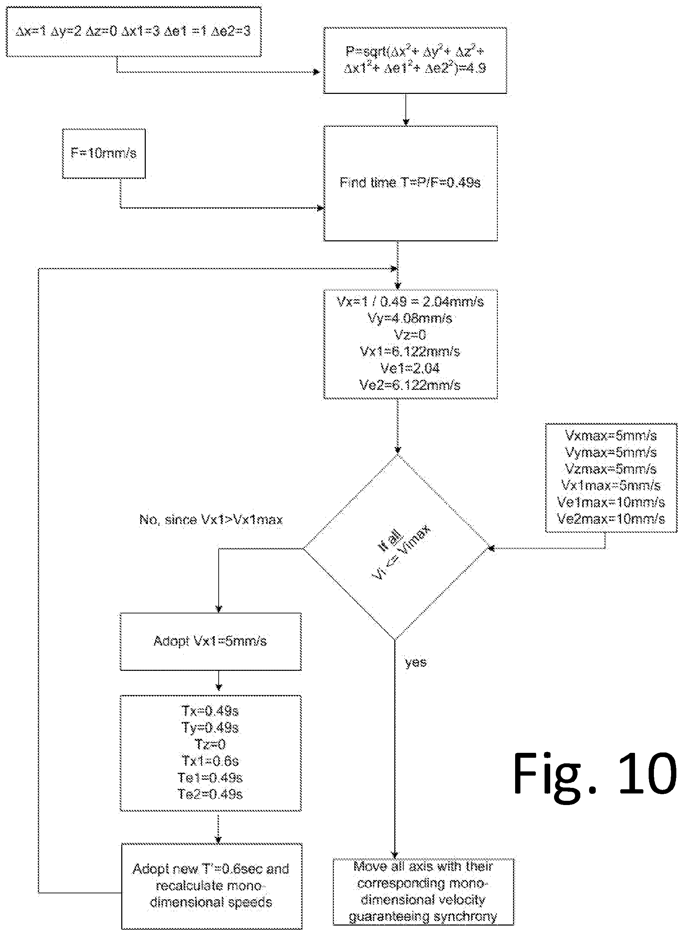

In Figures 9 and 10, an algorithm or dataflow is given as example on how to manage the speed for all of the separate axes based on the array data, specifically the relative value between two points in the array, the speed specified by the designer or user and the maximum capabilities in terms of permitted speeds for each of the axes of the apparatus. In particular, a maximum speed for each direction may be either a nominal speed of the relative actuator or a maximum speed stored as such in the electronic control unit.

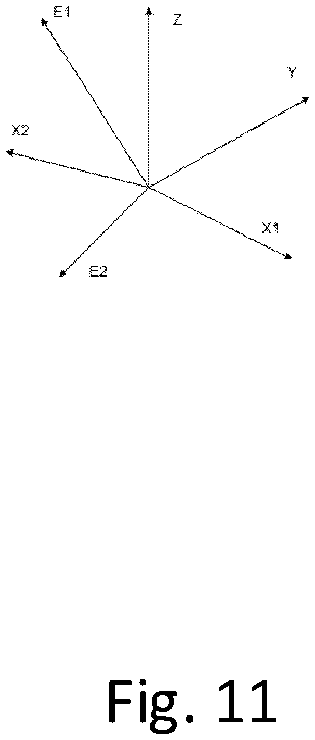

Figure 11 shows the multi-dimensional reference frame wherein 'displacement' vector P and 'speed' vector F are defined and whose length or norm is mentioned in figure 9. Such vectors comprise the combination of position information and non-position information, e.g. a numerical parameter indicative of the quantity of material to be deposited by each printing head for the given step of deposition defined by adjacent point in the array E1, E2. Such parameter may be a length [mm] of filament-like material to be deposited between two adjacent points of the array, an angle of rotation of a filament-like material feeding device or the like. Each row of the array defines a mono-dimensional compontent that combines with other mono-dimensional components to generate multi-dimensional vector P. Therefore any row of the array provides information to generate a multi-dimensional vector P.

Vector F is set by the designer in various manners, e.g. is assigned at the beginning of a layer and kept constant or changes every e.g. 10 rows of the array etc. and vector P includes the operating position coordinates between a starting point and a target point of deposition heads along the respective toolpath, the starting and target points being adjacent along the array of coordinates and material deposition parameters.

According to an embodiment, both P and F shall be expressed by the same formula, for example the norm. Dividing norm of vector P by norm of vector F provides a time that shall be common to all actuators along the axes and deposition system to guarantee a simultanous motion. Dividing the difference between the position coordinates and material quantity of the target point and the starting point by such common time provides the speed along each axis and deposition rates for each deposition head. In case one of such values is higher than a pre-set maximum value for a given axis or deposition system, such pre-set value is chosen by the control unit as the actual speed or rate value (left branch in flowcharts of figs. 9 and 10) and the speed along the remaining axes and rates of the remaining deposition heads is calculated, in particular decreased, to satisy the condition to simultanously reach the coordinates of the target point. According to a preferred embodiment this is achieved by calculating a new time based on the actual (maximum) speed or rate and, with such new time, calculate the speeds along those axes or the deposition rates of the heads that were not above the pre-set value.

## Claims

1. A multi-head additive manufacturing machine comprising:
- A common first guide aligned to a first direction (Y);
- A common second guide aligned to a second direction (Z);
- A multi-deposition unit (8) comprising at least a first and second deposition device wherein first and second deposition devices are independently actuatable to provide different quantities of deposition material;
- A multi-head unit (MHU) movable with respect to the first and the second common guide and comprising at least a first and a second motorized deposition heads (1, 2, N) movable with respect to one another along a third guide aligned to a third direction (X), the first, second and third directions defining a three-dimensional reference frame for deposition; wherein the first and second printing heads (1, 2, N) comprise a respective opening (7) through which the material is deposited;
- An electronic control unit (ECU) programmed to:
control the movement of the first and second deposition head (1, 2, N) via actuators within the reference frame by processing at least a discretized sequence of coordinate value sets within the reference frame representing pre-defined first and second deposition paths (A, B) for the respective first and second deposition heads as a plurality of points;
provide, via a pre-defined first deposition quantity information for the first deposition head and a second deposition quantity information for the second deposition head, each of said deposition quantity information being associated to said points, a pre-defined quantity of material to be deposited along the first and second deposition paths via the openings (7) and the deposition system;
wherein the first and the second deposition heads are controlled with identical movements along the first and the second direction,
wherein said coordinate values futher include a first position information along the third direction for the first deposition head and a second position information along the third direction for the second deposition head such that, for at least a section of said sequence where the first and second deposition heads shall simultaneously deposit, the first and second deposition paths describe arbitrarily different, non-mirrored, non-replica first and second segments (S1, S2), such segments having, for a first span along the first direction (Y1-Y3) and for a second span along the second direction, a corresponding first length (X2-X4) associated to the first head and a corresponding second legth (X1-X5) associated to the second head so that the first segment (S1) has a different length from that of the second segment (S2),
the control unit coordinating the first and second deposition heads by operating said actuators and deposition system so that, when the first and second deposition head simultaneously operate based on said section, each coordinate value set of said sequence having identical coordinate values along the first and second directions and different values along the third direction and for the first and second deposition information, is simultaneously reached by the first and second deposition head so that the first and the second segment (S1, S2) are synchronously deposited over the same time interval by having a first travelling speed of the first head lower than a second travelling speed of the second head when the first segment is shorter than said second segment.

2. Machine according to claim 1, wherein the sequence processed by the control unit is such to define a first pre-defined discretization step along the first direction and a second pre-defined discretization step along the second direction between adjacent coordinate value sets and wherein at least one of a first plurality of pre-defined first discretization steps and a second plurality of predefined second discretization steps have non-constant discretization step values along said section, said first and second plurality of dicretization steps being applied together to the first and second deposition paths so that said paths have the same discretization along the first and second directions.

3. Machine according to claims 1 or 2, wherein the control unit is programmed so that, when two or more stratified layers of each printed object or sub-part are at least partially defined by the deposition paths, the first path of the first head of a lower layer is not overlapped by the second path of the second head of a higher layer and the second path of a lower layer is not overlapped by the first path of a higher layer.

4. Machine according to any of the preceding claims, wherein at least within said section each point of the sequence is defined by at least six degree of freedom including first position information along the first direction, first position information along the second direction, third position information of the first deposition head along the third direction, fourth position information of the second deposition head along the third direction, the first deposition information and the second deposition information and wherein the control unit is programmed to:
- check if an inputted preferred speed value including deposition rates of the first and second deposition heads is compatible with a set of pre-defined speed values, each pre-defined speed value being associated to the respective degree of freedom;
- if the inputted speed is, along at least an axis or for the deposition system, higher than the relative pre-defined speed value or deposition rate, choose said relative pre-defined speed or rate value as the maximum speed or rate along the relative direction or associated to the deposition heads; and
- calculate other speed values along other axes or remaining deposition rate(s) so that the deposition heads will simultaneously reach a target point.

5. Machine according to any of the preceding claims, wherein the first deposition information and the second deposition information are different so that, between adjacent points of said sequence, the control unit causes a first width of material deposited at a given time by the first deposition head for the first segment (S1) to be different from a second width of material deposited for the second segment (S2) by the second deposition head so that a first area covered by the first segment is different from a second area covered by the second segment in width and/or in length.

6. Machine according to any of the precedeing claims, wherein the first deposition information and the second deposition information are different so that the control unit causes the first deposition head to be deactivated from deposition while the second depostion head is depositing and causes the first deposition head to deposit again while the second deposition head is depositing, thus obtaining a higher thickness for the deposited material of the first deposition head than that for the deposited material of the second deposition head.

7. Manufacturing method for two or more objects or sub-parts with a multi-head additive manufacturing machine comprising a common first guide aligned to a first direction (Y); a common second guide aligned to a second direction (Z); a multi-deposition unit (8) comprising at least of first and second deposition device wherein first and second deposition device are independently actuatable to provide different quantities of deposition material; and a multi-head unit (MHU) movable with respect to the first and the second common guide and comprising at least a first and a second motorized deposition heads (1, 2, N) movable with respect to one another along a third guide aligned to a third direction (X), the first, second and third directions defining a three-dimensional reference frame for deposition; wherein the first and second printing heads (1, 2, N) comprise a respective opening (7) through which the material is deposited;
the method comprising the step of, via an electronic control unit (ECU), receiving at least a discretized sequence of coordinate value sets within the reference frame representing a pre-defined first and a second deposition path (A, B) for the respective first and second deposition heads as a plurality of points; providing, via a pre-defined first deposition quantity information for the first deposition head and a second deposition quantity information for the second deposition head, each of said deposition quantity information being associated to said points, a pre-defined quantity of material to be deposited along the first and second deposition path via the openings (7) and the deposition system; controlling suitable movements within the reference frame of the first and second deposition heads along the third direction to implement the first and second deposition paths,
wherein the first and the second deposition heads are controlled with identical movements along the first and the second direction,
wherein said coordinate values further include a first position information along the third direction for the first deposition head and a second position information along the third direction for the second deposition head such that, for at least a section of said sequence where the first and second deposition heads shall simultaneously deposit, the first and second deposition paths describe arbitrarily different, non-mirrored, non-replica first and second segments,such segments having, for a first span along the first direction (Y1-Y3) and for a second span along the second direction, a corresponding first length (X2-X4) associated to the first head and a corresponding second legth (X1-X5) associated to the second head so that the first segment (S1) has a different length from that of the second segment (S2),
the control unit coordinating the first and second deposition heads by operating said actuators and deposition system so that, when the first and second deposition head simultaneously operate based on said section, each coordinate value set of said sequence having identical coordinate values along the first and second directions and different values along the third direction and for the first and second deposition information, is simultaneously reached by the first and second deposition head so that the first and the second segment (S1, S2) are synchronously deposited over the same time interval by having a first travelling speed of the first head lower than a second travelling speed of the second head when the first segment is shorter than said second segment.

8. Method according to claim 7, comprising the step of generating on the plane (YZ) of the first and second axis a first and a second projection of respective first and second 3D computational models of the relative object or sub-part, each of which is to be deposited by the first or second head; calculating a parameter indicative of overlapping between the first and second projection; changing a relative orientation between the first and second model within the reference frame until a target orientation is found such that the parameter reaches a predefined threshold; generating said sequence based on the target orientation so as to define a portion of each of the object or subpart the deposition of which is operated with the first and second heads depositing at the same time via sequences generating the first and second segments (S1, S2).

9. Method according to any of claims 7 or 8, further comprising the steps of:
- receive a single or plurality of first discretized toolpaths originated by the decomposition of a first computational model of one of the at least two objects and a single or plurality of second discretized toolpaths originated by the decomposition of a second computational model of another of the at least two objects, a common discretization step pattern being applied between adjacent points of a first and a second discretized toolpath where the first and second deposition head shall simultaneously deposit;
- pairing at least one of the first toolpaths with at least one of the second toolpaths in ordered sequential pairs based on said common discretization step pattern,
- for each such pair define a common direction of travel along the first and the second direction (Z, Y) so as to generate said sequence.

10. Method according to any of claims 7 to 9, wherein the objects are paired objects and said objects and sub-parts are wearable by an individual and comprising the step of generating a first and a second 3D computational model of one or more body portions of the individual based on an output by a biometric device and generating and or selecting the proper sequence based on the first and second 3D computational models.

## Patentansprüche

1. Mehrkopfmaschine für die additive Fertigung, umfassend:
- eine erste gemeinsame Führung, ausgerichtet in eine erste Richtung (Y);
- eine zweite gemeinsame Führung, ausgerichtet in eine zweite Richtung (Z);
- eine Mehrfachauftragseinheit (8), bestehend aus mindestens einer ersten und einer zweiten Auftragsvorrichtung, wobei die erste und die zweite Auftragsvorrichtung jeweils unabhängig voneinander betreibbar sind, um unterschiedliche Materialmengen aufzutragen;
- eine Mehrkopfeinheit (MHU), die relativ zu der ersten und zweiten gemeinsamen Führung beweglich ist und mindestens einen ersten und einen zweiten motorisierten Auftragskopf (1, 2, N) umfasst, die relativ zueinander entlang einer dritten Führung beweglich sind, ausgerichtet in eine dritte Richtung (X), wobei die erste, zweite und dritte Richtung einen dreidimensionalen Referenzrahmen für den Auftrag definieren; wobei der erste und der zweite Druckkopf (1, 2, N) jeweils eine Öffnung (7) aufweisen, durch die das Material aufgetragen wird;
- eine elektronische Steuereinheit (ECU), die programmiert ist, um:
die Bewegung des ersten und zweiten Auftragskopfes (1, 2, N) durch Aktuatoren im Referenzrahmen zu steuern, indem sie mindestens eine diskretisierte Folge von Koordinatenwerten im Referenzrahmen verarbeitet, wobei sie die vordefinierten ersten und zweiten Auftragspfade (A, B) für den jeweiligen ersten und zweiten Auftragskopf in Form mehrerer Punkte darstellen;
eine erste vordefinierte Auftragsmengeninformation für den ersten Auftragskopf und eine zweite Auftragsinformation für den zweiten Auftragskopf liefern, wobei jede dieser Auftragsmengeninformationen den genannten Punkten zugeordnet ist, wobei eine vordefinierte Materialmenge entlang des ersten und zweiten Auftragspfads durch die Öffnungen (7) und das Auftragssystem aufgetragen werden soll;
wobei der erste und der zweite Auftragskopf mit identischen Bewegungen in die erste und zweite Richtung gesteuert werden, wobei die Koordinatenwerte auch eine erste Positionsinformation in die dritte Richtung für den ersten Auftragskopf und eine zweite Positionsinformation in die dritte Richtung für den zweiten Auftragskopf umfassen, so dass für mindestens einen Abschnitt der Sequenz, in dem der erste und der zweite Auftragskopf gleichzeitig ablagern, werden die ersten und zweiten Auftragspfade beliebig unterschiedliche, nicht symmetrische und nicht replizierte erste und zweite Segmente (S1, S2) beschreiben, wobei diese Segmente für eine erste Spanne in die erste Richtung (Y1-Y3) und für eine zweite Spanne in die zweite Richtung eine erste entsprechende Länge (X2-X4) für den ersten Kopf und eine zweite entsprechende Länge (X1-X5) für den zweiten Kopf aufweisen, so dass das erste Segment (S1) eine andere Länge als das zweite Segment (S2) aufweist,
wobei die Steuereinheit den ersten und den zweiten Auftragskopf durch Ansteuerung der Aktuatoren und des Auftragssystems koordiniert, sodass bei gleichzeitigem Betrieb des ersten und des zweiten Auftragskopfes auf der Grundlage dieses Abschnitts jeder Satz von Koordinatenwerten der Sequenz in der ersten und zweiten Richtung identische Koordinatenwerte und in der dritten Richtung unterschiedliche Werte aufweist, von den ersten und zweiten Auftragsköpfen gleichzeitig erreicht wird, so dass die ersten und zweiten Segmente (S1, S2) synchron über das gleiche Zeitintervall abgelagert werden, wobei die erste Bewegungsgeschwindigkeit des ersten Kopfes niedriger ist als die zweite Bewegungsgeschwindigkeit des zweiten Kopfes, wenn das erste Segment kürzer ist als das zweite Segment.

2. Maschine nach Anspruch 1, wobei die von der Steuereinheit verarbeitete Sequenz einen ersten vordefinierten Diskretisierungsschritt entlang der ersten Richtung und einen zweiten vordefinierten Diskretisierungsschritt entlang der zweiten Richtung zwischen Sätzen benachbarter Koordinatenwerte definiert, wobei mindestens eine erste Anzahl erster und eine zweite Anzahl zweiter vordefinierter Diskretisierungsschritte entlang des Abschnitts nicht konstante Diskretisierungsschrittwerte aufweisen und die erste und die zweite Anzahl gemeinsam auf die ersten und zweiten Auftragspfade angewendet werden, sodass diese Pfade in der ersten und zweiten Richtung die gleiche Diskretisierung aufweisen.

3. Maschine nach Anspruch 1 oder 2, wobei die Steuereinheit so programmiert ist, dass, wenn zwei oder mehr laminierte Schichten jedes gedruckten Objekts oder Teilstücks zumindest teilweise durch die Auftragspfade definiert sind, sich der erste Pfad des ersten Kopfs einer unteren Schicht nicht mit dem zweiten Pfad des zweiten Kopfs einer oberen Schicht und der zweite Pfad einer unteren Schicht nicht mit dem ersten Pfad einer oberen Schicht überlappt.

4. Maschine nach einem der vorhergehenden Ansprüche, wobei zumindest in diesem Abschnitt ist jeder Punkt der Sequenz durch mindestens sechs Freiheitsgrade definiert, die eine erste Positionsinformation in der ersten Richtung, eine erste Positionsinformation in der zweiten Richtung, eine dritte Positionsinformation des ersten Auftragskopfes in der dritten Richtung, eine vierte Positionsinformation des zweiten Auftragskopfes in der dritten Richtung sowie die erste und zweite Beschichtungsinformation umfassen, wobei die Steuereinheit so programmiert ist, dass sie:
- prüft, ob ein eingegebener bevorzugter Geschwindigkeitswert, einschließlich der Beschichtungsgeschwindigkeiten des ersten und zweiten Auftragskopfes, mit einem Satz vordefinierter Geschwindigkeitswerte kompatibel ist, wobei jeder vordefinierte Geschwindigkeitswert seinem Freiheitsgrad zugeordnet ist;
- wenn die eingegebene Geschwindigkeit entlang mindestens einer Achse oder für das Auftragssystem größer ist als der Geschwindigkeitswert oder die relative vordefinierte Auftragsgeschwindigkeit, diesen Geschwindigkeitswert oder diese relative vordefinierte Geschwindigkeit als Geschwindigkeit oder Maximalgeschwindigkeit in der den Auftragsköpfen zugeordneten relativen Richtung wählt; und
- andere Geschwindigkeitswerte entlang anderer Achsen oder die verbleibenden Auftragsgeschwindigkeiten berechnet, sodass die Beschichtungsköpfe den Zielpunkt gleichzeitig erreichen.

5. Maschine nach einem der vorhergehenden Ansprüche, wobei die erste und die zweite Auftragsinformation unterschiedlich sind, sodass die Steuereinheit zwischen benachbarten Punkten der Sequenz eine Differenz zwischen der vom ersten Auftragskopf für das erste Segment (S1) zu einem bestimmten Zeitpunkt abgelegten ersten Materialbreite und der vom zweiten Auftragskopf für das zweite Segment (S2) abgelegten zweiten Materialbreite erzeugt, sodass sich ein vom ersten Segment abgedeckter erster Bereich in Breite und/oder Länge von dem vom zweiten Segment abgedeckten zweiten Bereich unterscheidet.

6. Maschine nach einem der vorhergehenden Ansprüche, wobei die erste und die zweite Auftragsinformation unterschiedlich sind, sodass die Steuereinheit den ersten Auftragskopf während der Ablage des zweiten Kopfs deaktiviert und während der Ablage des zweiten Kopfs eine neue Ablage des ersten Kopfs veranlasst, wodurch eine vom ersten Auftragskopf abgelegte Materialdicke erzielt wird, die größer ist als die des vom zweiten Auftragskopf abgelegten Materials.

7. Verfahren zum Herstellen von zwei oder mehr Objekten oder Unterteilen unter Verwendung einer Mehrkopfmaschine zur additiven Fertigung, umfassend eine erste gemeinsame Führung, die in eine erste Richtung (Y) ausgerichtet ist; eine zweite gemeinsame Führung, die in eine zweite Richtung (Z) ausgerichtet ist; eine Mehrfachauftragseinheit (8), die mindestens eine erste und eine zweite Auftragsvorrichtung umfasst, wobei die erste und die zweite Auftragsvorrichtung unabhängig voneinander betrieben werden können, um unterschiedliche Mengen an Auftragsmaterial bereitzustellen; und eine Mehrkopfeinheit (MHU), die relativ zur ersten und zweiten gemeinsamen Führung beweglich ist und mindestens einen ersten und einen zweiten motorisierten Auftragskopf (1, 2, N) umfasst, die relativ zueinander entlang einer dritten Führung beweglich sind, die in eine dritte Richtung (X) ausgerichtet ist, wobei die erste, zweite und dritte Richtung einen dreidimensionalen Referenzrahmen für den Auftrag definieren; wobei der erste und der zweite Druckkopf (1, 2, N) jeweils eine Öffnung (7) umfassen, durch die das Material abgeschieden wird;
wobei das Verfahren den folgenden Schritt umfasst:
- Empfangen von mindestens einer diskretisierten Folge von Koordinatenwerten im Referenzrahmen über eine elektronische Steuereinheit (ECU), die einen ersten und einen zweiten vordefinierten Auftragspfad (A, B) für den jeweiligen ersten und zweiten Auftragskopf in Form einer Vielzahl von Punkten darstellen;
- Bereitstellen einer vordefinierten Materialmenge entlang des ersten und des zweiten Auftragspfads durch die Öffnungen (7) und das Auftragssystem über eine erste vordefinierte Auftragsmengeninformation für den ersten Auftragskopf und eine zweite Auftragsmengeninformation für den zweiten Auftragskopf, wobei jede dieser Auftragsmengeninformationen den Punkten zugeordnet ist;
- Steuern von geeigneten Bewegungen im Referenzrahmen des ersten und zweiten Auftragskopfes in der dritten Richtung, um die ersten und zweiten Auftragspfade zu implementieren,
wobei der erste und zweite Auftragskopf mit identischen Bewegungen in der ersten und zweiten Richtung gesteuert werden,
wobei die Koordinatenwerte ferner eine erste Positionsinformation in der dritten Richtung für den ersten Auftragskopf und eine zweite Positionsinformation in der dritten Richtung für den zweiten Auftragskopf umfassen, so dass während mindestens eines Abschnitts der Sequenz, in dem der erste und zweite Auftragskopf gleichzeitig abscheiden sollen, beschreiben die ersten und zweiten Auftragspfade beliebig unterschiedliche, nicht symmetrische und nicht replizierte erste und zweite Segmente, wobei diese Segmente für eine erste Spanne in der ersten Richtung (Y1-Y3) und für eine zweite Spanne in der zweiten Richtung eine erste entsprechende Länge (X2-X4) aufweisen, die dem ersten Kopf zugeordnet ist, und eine zweite entsprechende Länge (X1-X5), die dem zweiten Kopf zugeordnet ist, so dass das erste Segment (S1) eine andere Länge als das zweite Segment (S2) aufweist,
wobei die Steuereinheit den ersten und zweiten Auftragskopf koordiniert, indem sie die Aktuatoren und das Auftragssystem, so dass, wenn der erste und der zweite Auftragskopf gleichzeitig auf dem Abschnitt arbeiten, jeder Satz von Koordinatenwerten der Sequenz, die identische Koordinatenwerte in der ersten und zweiten Richtung und unterschiedliche Werte in der dritten Richtung aufweisen, sowie für die erste und zweite Auftragsinformation, gleichzeitig von dem ersten und dem zweiten Auftragskopf erreicht wird, so dass das erste und das zweite Segment (S1, S2) synchron über das gleiche Zeitintervall abgelagert werden, wobei die erste Bewegungsgeschwindigkeit des ersten Kopfes niedriger als die zweite Bewegungsgeschwindigkeit des zweiten Kopfes ist, wenn das erste Segment kürzer als das zweite Segment ist.

8. Verfahren nach Anspruch 7, umfassend den Schritt:
Erzeugen einer ersten und einer zweiten Projektion des jeweiligen ersten und zweiten 3D-Computermodells des betreffenden Objekts oder Teilstücks auf der Ebene (YZ) der ersten und zweiten Achse, die jeweils vom ersten oder zweiten Kopf abgelegt werden sollen;
Berechnen eines Parameters, der die Überlappung zwischen der ersten und zweiten Projektion angibt;
Ändern der relativen Ausrichtung zwischen dem ersten und zweiten Modell im Referenzrahmen, bis eine Zielausrichtung gefunden ist, sodass der Parameter einen vordefinierten Schwellenwert erreicht;
Erzeugen der Sequenz in Abhängigkeit von der Zielausrichtung, um einen Teil jedes Objekts oder Teilstücks zu definieren, dessen Ablage durch den ersten und zweiten Kopf gleichzeitig erfolgt, durch Sequenzen, die das erste und zweite Segment (S1, S2) erzeugen.

9. Verfahren nach einem der Ansprüche 7 oder 8, ferner die folgenden Schritte umfassend:
- Empfangen einer oder mehrerer erster diskretisierter Werkzeugpfade, die aus der Zerlegung eines ersten Computermodells eines der beiden Objekte resultieren, und einer oder mehrerer zweiter diskretisierter Werkzeugpfade, die aus der Zerlegung eines zweiten Computermodells eines anderen der beiden Objekte resultieren, wobei ein gemeinsames Diskretisierungsschrittmodell zwischen den benachbarten Punkten der ersten und zweiten diskretisierten Werkzeugpfade angewendet wird, an denen der erste und der zweite Auftragskopf gleichzeitig auftragen müssen;
- Zuordnen mindestens einer der ersten Werkzeugpfade zu mindestens einer der zweiten Werkzeugpfade in geordneten, sequenziellen Paaren gemäß dem gemeinsamen Diskretisierungsschrittmodell;
- Definieren einer gemeinsamen Bewegungsrichtung (Z, Y) für jedes Paar zur Erzeugung der Sequenz.

10. Verfahren nach einem der Ansprüche 7 bis 9, wobei die Objekte gepaarte Objekte sind und die Objekte und Unterteile von einer Person getragen werden können, wobei das Verfahren die Schritte umfasst:
Erzeugen eines ersten und eines zweiten 3D-Computermodells eines oder mehrerer Körperteile der Person aus Daten von einem biometrischen Gerät und
Erzeugen und/oder Auswählen der entsprechenden Sequenz aus dem ersten und zweiten 3D-Computermodell.

## Revendications

1. Machine de fabrication additive multi-têtes comprenant :
- un premier guide commun, aligné sur une première direction (Y) ;
- un deuxième guide commun, aligné sur une deuxième direction (Z) ;
- une unité de dépôt multiple (8) comprenant au moins un premier et un deuxième dispositif de dépôt, dans laquelle le premier et deuxième dispositifs de dépôt sont actionnable chacun indépendamment pour fournir différentes quantités de matériau de dépôt ;
- une unité multi-têtes (MHU) mobile par rapport au premier et au deuxième guide commun et comprenant au moins une première et une deuxième têtes de dépôt motorisées (1, 2, N) mobiles l'une par rapport à l'autre le long d'un troisième guide aligné sur une troisième direction (X), les première, deuxième et troisième directions définissant un référentiel tridimensionnel pour le dépôt ; dans laquelle les première et deuxième têtes d'impression (1, 2, N) comportant une ouverture respective (7) par laquelle le matériau est déposé ;
- une unité de commande électronique (ECU) programmée pour :
commander le mouvement des première et deuxième têtes de dépôt (1, 2, N) par des actionneurs dans le référentiel, en traitant au moins une séquence discrétisée de valeurs de coordonnées dans le référentiel, représentant des premier et deuxième trajets de dépôt prédéfinis (A, B) pour les première et deuxième têtes de dépôt respectives sous forme de plusieurs points ;
fournir, par une première information de quantité de dépôt prédéfinie pour la première tête de dépôt et une deuxième information de quantité de dépôt pour la deuxième tête de dépôt, chacune desdites informations de quantité de dépôt étant associée auxdits points, une quantité prédéfinie de matériau à déposer le long des premier et deuxième trajets de dépôt par les ouvertures (7) et le système de dépôt ;
dans la quelle les première et deuxième têtes de dépôt sont commandées avec des mouvements identiques dans les première et deuxième directions,
dans laquelle lesdites valeurs de coordonnées comprennent également une première information de position dans la troisième direction pour la première tête de dépôt et une deuxième information de position dans la troisième direction pour la deuxième tête de dépôt, de sorte que, pour au moins une section de ladite séquence où les première et deuxième têtes de dépôt doivent déposer simultanément, les premier et deuxième trajets de dépôt décrivent des premier et deuxième segments (S1, S2) arbitrairement différents, non symétriques et non répliqués, ces segments présentant, pour une première portée dans la première direction (Y1-Y3) et pour une deuxième portée dans la deuxième direction, une première longueur correspondante (X2-X4) associée à la première tête et une deuxième longueur correspondante (X1-X5) associée à la deuxième tête, de sorte que le premier segment (S1) ait une longueur différente de celle du deuxième segment (S2),
l'unité de commande coordonne les première et deuxième têtes de dépôt en actionnant lesdits actionneurs et le système de dépôt de sorte que, lorsque les première et deuxième têtes de dépôt sont simultanément fonctionnant sur la base de ladite section, chaque ensemble de valeurs de coordonnées de ladite séquence, ayant des valeurs de coordonnées identiques dans les première et deuxième directions et des valeurs différentes dans la troisième direction, est atteint simultanément par les première et deuxième têtes de dépôt pour les première et deuxième têtes de dépôt, de sorte que les premier et deuxième segments (S1, S2) sont déposés de manière synchrone sur le même intervalle de temps, la première vitesse de déplacement de la première tête étant inférieure à la deuxième vitesse de déplacement de la deuxième tête lorsque le premier segment est plus court que ledit deuxième segment.

2. Machine selon la revendication 1, dans laquelle la séquence traitée par l'unité de commande définit une première étape de discrétisation prédéfinie dans la première direction et une deuxième étape de discrétisation prédéfinie dans la deuxième direction entre des ensembles de valeurs de coordonnées adjacentes, et dans laquelle au moins une première pluralité de premières étapes de discrétisation prédéfinies et une deuxième pluralité de deuxièmes étapes de discrétisation prédéfinies présentent des valeurs d'étapes de discrétisation non constantes le long de ladite section, lesdites première et deuxième pluralités d'étapes de discrétisation étant appliquées conjointement aux premier et deuxième trajets de dépôt de sorte que lesdits trajets présentent la même discrétisation dans la première et deuxième directions.

3. Machine selon la revendication 1 ou 2, dans laquelle l'unité de commande est programmée de telle sorte que, lorsque deux ou plusieurs couches stratifiées de chaque objet ou sous-partie imprimé sont au moins partiellement définies par les trajets de dépôt, le premier trajet de la première tête d'une couche inférieure n'est pas chevauché par le deuxième trajet de la deuxième tête d'une couche supérieure, et le deuxième trajet d'une couche inférieure n'est pas chevauché par le premier trajet d'une couche supérieure.

4. Machine selon l'une quelconque des revendications précédentes, dans laquelle, au moins dans ladite section, chaque point de la séquence est défini par au moins six degrés de liberté, comprenant une première information de position dans la première direction, une première information de position dans la deuxième direction, une troisième information de position de la première tête de dépôt dans la troisième direction, une quatrième information de position de la deuxième tête de dépôt dans la troisième direction, les première et deuxième informations de dépôt, et l'unité de commande étant programmée pour :
- vérifier si une valeur de vitesse préférée saisie, incluant les vitesses de dépôt des première et deuxième têtes de dépôt, est compatible avec un ensemble de valeurs de vitesse prédéfinies, chaque valeur de vitesse prédéfinie étant associée à son degré de liberté ;
- si la vitesse saisie est, le long d'au moins un axe ou pour le système de dépôt, supérieure à la valeur de vitesse ou de vitesse de dépôt prédéfinie relative, choisir cette valeur de vitesse ou de vitesse prédéfinie relative comme vitesse ou vitesse maximale dans la direction relative associée aux têtes de dépôt ; et
- calculer d'autres valeurs de vitesse le long d'autres axes ou de la ou des vitesses de dépôt restantes afin que les têtes de dépôt atteignent simultanément le point cible.

5. Machine selon l'une quelconque des revendications précédentes, dans laquelle les première et deuxième informations de dépôt sont différentes de sorte que, entre des points adjacents de ladite séquence, l'unité de commande provoque une différence entre la première largeur de matériau déposée à un instant donné par la première tête de dépôt pour le premier segment (S1) et la deuxième largeur de matériau déposée pour le deuxième segment (S2) par la deuxième tête de dépôt, de sorte qu'une première zone couverte par le premier segment diffère de sa deuxième zone couverte par le deuxième segment en largeur et/ou en longueur.

6. Machine selon l'une quelconque des revendications précédentes, dans laquelle les première et deuxième informations de dépôt sont différentes de sorte que l'unité de commande provoque la désactivation de la première tête de dépôt pendant le dépôt de la deuxième tête, et provoque un nouveau dépôt de la première tête pendant le dépôt de la deuxième tête, obtenant ainsi une épaisseur de matériau déposée par la première tête de dépôt supérieure à celle du matériau déposée par la deuxième tête de dépôt.

7. Procédé de fabrication de deux ou plusieurs objets ou sous-pièces à l'aide d'une machine de fabrication additive multi-têtes comprenant un premier guide commun aligné sur une première direction (Y) ; un deuxième guide commun aligné sur une deuxième direction (Z) ; une unité de dépôt multiple (8) comprenant au moins un premier et un deuxième dispositif de dépôt, lesdits premier et deuxième dispositifs de dépôt étant actionnables indépendamment pour fournir différentes quantités de matériau de dépôt ; et une unité multi-têtes (MHU) mobile par rapport au premier et au deuxième guide commun et comprenant au moins une première et deuxième têtes de dépôt motorisées (1, 2, N) mobiles l'une par rapport à l'autre le long d'un troisième guide aligné sur une troisième direction (X), les première, deuxième et troisième directions définissant un référentiel tridimensionnel pour le dépôt ; les première et deuxième têtes d'impression (1, 2, N) comprenant une ouverture respective (7) à travers laquelle le matériau est déposé ;
le procédé comprenant l'étape consistant à, par l'intermédiaire d'une unité de commande électronique (ECU), recevoir au moins une séquence discrétisée d'ensembles de valeurs de coordonnées dans le référentiel représentant un premier et deuxième trajets de dépôt prédéfinis (A, B) pour les première et deuxième têtes de dépôt respectives sous la forme d'une pluralité de points ; fournir, par l'intermédiaire d'une première information de quantité de dépôt prédéfinie pour la première tête de dépôt et d'une deuxième information de quantité de dépôt pour la deuxième tête de dépôt, chacune desdites informations de quantité de dépôt étant associée auxdits points, une quantité prédéfinie de matériau à déposer le long du premier et du deuxième trajet de dépôt par les ouvertures (7) et le système de dépôt ;
contrôler des mouvements appropriés dans le référentiel des première et deuxième têtes de dépôt dans la troisième direction afin de mettre en œuvre les premier et deuxième trajets de dépôt,
dans lequel les première et deuxième têtes de dépôt sont contrôlées avec des mouvements identiques dans la première et la deuxième direction,
dans lequel lesdites valeurs de coordonnées comprennent en outre une première information de position dans la troisième direction pour la première tête de dépôt et une deuxième information de position dans la troisième direction pour la deuxième tête de dépôt, de sorte que, pendant au moins une section de ladite séquence où les première et deuxième têtes de dépôt doivent déposer simultanément, les premier et deuxième trajets de dépôt décrivent des premier et deuxième segments arbitrairement différents, non symétriques et non répliqués, lesdits segments présentant, pour une première portée dans la première direction (Y1-Y3) et pour une deuxième portée dans la deuxième direction, une première longueur correspondante (X2-X4) associée à la première tête et une deuxième longueur correspondante (X1-X5) associée à la deuxième tête, de sorte que le premier segment (S1) présente une longueur différente de celle du deuxième segment (S2),
dans lequel l'unité de commande coordonne les première et deuxième têtes de dépôt en actionnant lesdits actionneurs et le système de dépôt de sorte que, lorsque les première et deuxième têtes de dépôt fonctionnent simultanément sur ladite section, chaque ensemble de valeurs de coordonnées de ladite séquence, ayant des valeurs de coordonnées identiques dans la première et deuxième directions et des valeurs différentes dans la troisième direction, ainsi que pour les première et deuxième informations de dépôt, soit atteint simultanément par les première et deuxième têtes de dépôt, de sorte que les premier et deuxième segments (S1, S2) soient déposés de manière synchrone sur le même intervalle de temps, la première vitesse de déplacement de la première tête étant inférieure à la deuxième vitesse de déplacement de la deuxième tête lorsque le premier segment est plus court que ledit deuxième segment.

8. Procédé selon la revendication 7, comprenant l'étape consistant à générer, sur le plan (YZ) des premier et deuxième axes, une première et une deuxième projection des premier et deuxième modèles informatiques 3D respectifs de l'objet ou de la sous-partie concernée, chacun devant être déposé par la première ou la deuxième tête ; calculer un paramètre indiquant le chevauchement entre la première et la deuxième projection ; modifier l'orientation relative entre le premier et le deuxième modèle dans le référentiel jusqu'à ce qu'une orientation cible soit trouvée, de sorte que le paramètre atteigne un seuil prédéfini ; générer ladite séquence en fonction de l'orientation cible afin de définir une portion de chaque objet ou sous-partie dont le dépôt est effectué par les première et deuxième têtes déposant simultanément, par des séquences générant les premier et deuxième segments (S1, S2).

9. Procédé selon l'une quelconque des revendications 7 ou 8, comprenant en outre les étapes suivantes :
- recevoir un ou plusieurs premiers trajets d'outil discrétisés issus de la décomposition d'un premier modèle informatique de l'un des deux objets, et d'un ou plusieurs deuxièmes trajets d'outil discrétisés issus de la décomposition d'un deuxième modèle informatique d'un autre des deux objets, un modèle d'étape de discrétisation commun étant appliqué entre les points adjacents des premier et deuxième trajet d'outil discrétisés où les première et deuxième têtes de dépôt doivent déposer simultanément ;
- associer au moins un des premiers trajets d'outil à au moins un des deuxièmes trajets d'outil par paires séquentielles ordonnées, selon ledit modèle d'étapes de discrétisation commun ;
- définir pour chaque paire une direction de déplacement commune (Z, Y) afin de générer ladite séquence.

10. Procédé selon l'une quelconque des revendications 7 à 9, dans lequel les objets sont des objets appariés et lesdits objets et sous-parties peuvent être portés par un individu, le procédé comprenant l'étape consistant à générer un premier et un deuxième modèle informatiques 3D d'une ou plusieurs parties du corps de l'individu, à partir des données d'un dispositif biométrique, et à générer et/ou sélectionner la séquence appropriée à partir des premier et deuxième modèles informatiques 3D.
